# EUROPEAN PATENT APPLICATION

(11) **EP 4 451 724 A1**
(43) Date of publication of application: **23.10.2024**
(21) Application number: 22906639.4
(22) Date of filing: 15.12.2022
(51) Int. Cl.: H04W 24/02, H04W 88/04

(54) **RSC DETERMINATION METHOD, TERMINAL, AND NETWORK SIDE DEVICE**

(30) Priority: 16.12.2021 CN 202111545554
(71) Applicant: Vivo Mobile Communication Co., Ltd., Dongguan, Guangdong 523863 (CN)
(72) Inventor: ZHANG, Yizhong, Dongguan, Guangdong 523863 (CN); WANG, Wen, Dongguan, Guangdong 523863 (CN)
(74) Representative: Lavoix
(86) International application number: PCT/CN2022/139236
(87) International publication number: WO 2023/109894

(57) **Abstract**

This application pertains to the field of communication technologies, and discloses an RSC determining method, a terminal, and a network side device. The RSC determining method according to embodiments of this application includes: A terminal receives first policy information sent by a network side device, where the first policy information is used to indicate a target RSC; and the terminal determines the target RSC based on the first policy information.

## Description

### CROSS-REFERENCE TO RELATED APPLICATION

This application claims priority to Chinese Patent Application No. 202111545554.6, filed on December 16, 2021 and entitled "RSC DETERMINING METHOD, TERMINAL, AND NETWORK SIDE DEVICE", which is incorporated herein by reference in its entirety.

### TECHNICAL FIELD

This application pertains to the field of communication technologies, and specifically relates to an RSC determining method, a terminal, and a network side device.

### BACKGROUND

A relay (Relay) technology in a wireless communication system is to add one or more relay nodes between a base station and a terminal to forward a radio signal one or more times. In a UE-to-network relay scenario that new radio (New Radio, NR) supports, relay UE establishes separate wireless connections to user equipment (User Equipment, UE) and a network side device. The UE connected to the relay UE may be referred to as remote UE (Remote UE). The remote UE needs to perform data transmission with the network side device. However, due to poor coverage, the relay UE is used as for transfer. There is a Uu interface between the relay UE and a base station, and there is a sidelink (Sidelink, SL) PC5 interface between the relay UE and the remote UE. In a layer-3 architecture, the remote UE needs to select a relay service code (relay service code, RSC) before using a relay service, to trigger a relay UE discovery procedure (UE-to-network relay discovery procedure) for discovering the relay UE and using the relay UE for the relay service.

In a related technology, the remote UE cannot easily determine a suitable RSC quickly and accurately in some scenarios, resulting in a problem that the remote UE cannot use the relay service.

### SUMMARY

Embodiments of this application provide an RSC determining method, a terminal, and a network side device, to resolve a problem that the terminal cannot use a relay service.

According to a first aspect, an RSC determining method is provided, and the method includes:

A terminal receives first policy information sent by a network side device, where the first policy information is used to indicate a target RSC; and
the terminal determines the target RSC based on the first policy information.

According to a second aspect, an RSC determining method is provided, and the method includes:
A network side device sends first policy information to a terminal, where the first policy information is used to indicate a target RSC.

According to a third aspect, an RSC determining apparatus is provided and is used in a terminal, and the apparatus includes:
a receiving module, configured to receive first policy information sent by a network side device, where the first policy information is used to indicate a target RSC; and
a determining module, configured to determine the target RSC based on the first policy information.

According to a fourth aspect, an RSC determining apparatus is provided and is used in a network side device, and the apparatus includes:
a sending module, configured to send first policy information to a terminal, where the first policy information is used to indicate a target RSC.

According to a fifth aspect, a terminal is provided. The terminal includes a processor and a memory, the memory stores a program or instructions capable of being run on the processor, and the program or the instructions are executed by the processor to implement steps of the method according to the first aspect.

According to a sixth aspect, a terminal is provided, and includes a processor and a communication interface. The communication interface is configured to receive first policy information sent by a network side device, where the first policy information is used to indicate a target RSC; and the processor is configured to determine the target RSC based on the first policy information.

According to a seventh aspect, a network side device is provided. The network side device includes a processor and a memory, the memory stores a program or instructions capable of being run on the processor, and the program or the instructions are executed by the processor to implement steps of the method according to the first aspect.

According to an eighth aspect, a network side device is provided, and includes a processor and a communication interface. The communication interface is configured to send first policy information to a terminal, where the first policy information is used to indicate a target RSC.

According to a ninth aspect, an RSC determining system is provided, and includes a terminal and a network side device. The terminal may be configured to perform steps of the method according to the first aspect, and the network side device may be configured to perform steps of the method according to the second aspect.

According to a tenth aspect, a readable storage medium is provided. The readable storage medium stores a program or instructions, and the program or the instructions are executed by a processor to implement steps of the method according to the first aspect or steps of the method according to the second aspect.

According to an eleventh aspect, a chip is provided. The chip includes a processor and a communication interface, the communication interface is coupled to the processor, and the processor is configured to run a program or instructions to implement the method according to the first aspect or the method according to the second aspect.

According to a twelfth aspect, a computer program/program product is provided. The computer program/program product is stored in a storage medium, and the program/program product is executed by at least one processor to implement steps of the method according to the first aspect, or steps of the method according to the second aspect.

In embodiments of this application, after receiving the first policy information sent by the network side device, the terminal can determine the target RSC based on the first policy information. Then, the terminal triggers, based on the target RSC, a relay UE discovery procedure, to discover relay UE, so that the terminal uses the relay UE for a relay service.

### BRIEF DESCRIPTION OF DRAWINGS

FIG. 1 is a schematic diagram of a wireless communication system to which an embodiment of this application is applicable;
FIG. 2 is a first schematic flowchart of an RSC determining method according to an embodiment of this application;
FIG. 3 is a second schematic flowchart of an RSC determining method according to an embodiment of this application;
FIG. 4 is a first schematic diagram of a structure of an RSC determining apparatus according to an embodiment of this application;
FIG. 5 is a second schematic diagram of a structure of an RSC determining apparatus according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network side device according to an embodiment of this application.

### DESCRIPTION OF EMBODIMENTS

The following clearly describes the technical solutions in embodiments of this application with reference to the accompanying drawings in embodiments of this application. Clearly, the described embodiments are some of but not all embodiments of this application. All other embodiments obtained by a person of ordinary skill in the art based on embodiments of this application shall fall within the protection scope of this application.

The terms "first", "second", and the like in the description and the claims of this application are used to distinguish between similar objects instead of describing a specific order or sequence. It should be understood that, the terms used in such a way are interchangeable in proper circumstances, so that embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that technologies described in embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application may be used interchangeably. The technologies described can be applied to both the systems and the radio technologies mentioned above as well as to other systems and radio technologies. The following describes a new radio (New Radio, NR) system for an illustrative purpose, and terminology in NR is used in most of the following descriptions, although these technologies can also be applied to a communication system other than the NR system application, for example, a 6^{th} generation (6^{th} Generation, 6G) communication system.

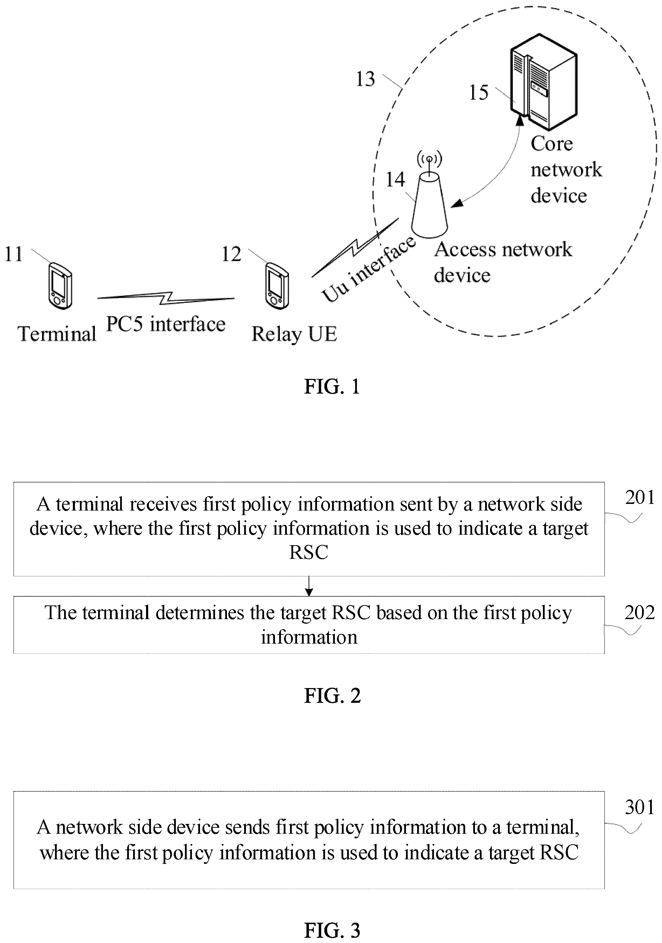

FIG. 1 is a schematic diagram of a wireless communication system to which an embodiment of this application is applicable. The wireless communication system shown in FIG. 1 includes a terminal 11, relay UE 12, and a network side device 13. The network side device 13 may include an access network device 14 and a core network device 15. The terminal 11 may be a terminal side device, for example, remote UE, for example, a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (household devices with wireless communication functions, such as a refrigerator, a television, a washing machine, or furniture), a gaming machine, a personal computer (personal computer, PC), a teller machine, or a self-service machine. The wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, and the like. It should be noted that a specific type of the terminal 11 is not limited in embodiments of this application. The network side device 14 may also be referred to as a radio access network device, a radio access network (Radio Access Network, RAN), a radio access network function, or a radio access network unit. The access network device 14 may include a base station, a WLAN access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as same technical effect is achieved, the base station is not limited to a specified technical term. It should be noted that, in embodiments of this application, only a base station in an NR system is used as an example, but a specific type of the base station is not limited. The core network device 15 may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in embodiments of this application, only a core network device in an NR system is used as an example for description, and a specific type of the core network device is not limited.

With reference to the accompanying drawings, the following describes in detail an RSC determining method provided in embodiments of this application by using some embodiments and application scenarios thereof.

The RSC determining method provided in embodiments of this application may be applied to a relay communication scenario, to resolve a problem that a terminal (for example, remote UE) cannot select a suitable RSC. In embodiments of this application, a network side device (for example, a PCF) configures first policy information to indicate a target RSC. After receiving the first policy information sent by the network side device, a terminal can determine the target RSC based on the first policy information. Then, the terminal triggers, based on the target RSC, a relay UE discovery procedure (UE-to-network relay discovery procedure), to discover relay UE, so that the terminal uses the relay UE for a relay service.

FIG. 2 is a first schematic flowchart of an RSC determining method according to an embodiment of this application. As shown in FIG. 2, the method includes steps 201 and 202.

Step 201: A terminal receives first policy information sent by a network side device, where the first policy information is used to indicate a target RSC.

Step 202: The terminal determines the target RSC based on the first policy information.

It should be noted that embodiments of this application may be applied to a relay communication scenario, to resolve a problem that a terminal (for example, remote UE) cannot select a suitable RSC.

Optionally, the first policy information includes at least one of the following:
a proximity-based services policy (Proximity-based Services policy, ProSeP);
a user equipment route selection policy (UE Route Selection Policy, URSP);
a vehicle-to-everything policy (Vehicle-to-Everything policy, V2XP); and
an unmanned aerial vehicle policy (Unmanned Aerial Vehicle policy, UAVP).

In the RSC determining method in this embodiment of this application, after receiving the first policy information sent by the network side device, the terminal can determine the target RSC based on the first policy information. Then, the terminal triggers, based on the target RSC, a relay UE discovery procedure, to discover relay UE, so that the terminal uses the relay UE for a relay service.

An implementation of the first policy information provided in this embodiment of this application is described below.

### 1. Enhanced route selection descriptor (Route selection descriptor, RSD)

The enhanced RSD means including an RSD in a URSP. The RSD includes at least one of the following:
(1) First indication information, where the first indication information is used to indicate that application traffic of the terminal is sent by a relay terminal not in a protocol data unit (Protocol Data Unit, PDU) session when the terminal matches the RSD. Optionally, the first indication information is used to indicate that the relay terminal is a layer-3 UE-to-network relay (Layer-3 UE-to-Network Relay).
(2) RSC selection information, where the RSC selection information includes at least one RSC.
(3) PDU session parameter, where the PDU session parameter includes at least one of the following:
   session and service continuity mode selection (SSC Mode Selection) information;
   network slice selection (Network Slice Selection) information;
   data network name selection (DNN Selection) information;
   PDU session type selection (PDU Session Type Selection) information; and
   access type preference (Access Type preference) information.

Herein, the following two cases are described below separately.

Case 1: When the RSD includes the first indication information, the RSD further needs to include at least one of the following: the RSC selection information; and the PDU session parameter. Optionally, the first indication information is a ProSe Layer-3 UE-to-Network Relay Offload indication.

For example, when the RSD includes the ProSe Layer-3 UE-to-Network Relay Offload indication, the RSD further needs to include at least one of the following:

The SSC mode selection information, where the SSC mode selection information includes one SSC mode;
the network slice selection information, where the network slice selection information includes one S-NSSAI or one group of S-NSSAIs;
the DNN selection information, where the DNN selection information includes one or more data network names;
the PDU session type selection information, where the PDU session type selection information includes one PDU session type;
the access type preference information, where the access type preference information includes 3GPP, non-3GPP, or a preference for multi-access (Multi-Access); and
the RSC selection information, where the RSC selection information includes one or more RSCs.

In the implementation with the enhanced RSD, an implementation in which the terminal determines the target RSC based on the first policy information includes any one of the following:
(1) The terminal determines the target RSC based on the PDU session parameter and a first mapping relationship, where the first mapping relationship is used to indicate a correspondence between the PDU session parameter and an RSC.

Optionally, the first policy information includes at least one of the ProSeP, the V2XP, and the UAVP, and at least one of the ProSeP, the V2XP, and the UAVP includes the first mapping relationship.

For example, when the RSD includes the first indication information and the PDU session parameter, the terminal determines the target RSC based on the PDU session parameter included in the RSD and the first mapping relationship included in the ProSeP.

(2) The terminal determines the target RSC based on the RSC selection information.

For example, when the RSD includes the first indication information and the RSC selection information, the terminal selects one RSC in the RSC selection information.

If the RSC selection information includes a plurality of RSCs, RSC selection depends on terminal implementation. In other words, that the terminal determines the target RSC based on the RSC selection information depends on terminal implementation.

The terminal implementation includes any one of the following:
(a) The terminal selects one RSC in the RSC selection information based on application information of an application and determines that the RSC is the target RSC.
(b) The terminal selects an N^{th} RSC in the RSC selection information and determines that the RSC is the target RSC, where N is a positive integer.

For example, the terminal selects the first RSC in the RSC selection information and determines that the RSC is the target RSC; or the terminal randomly selects one RSC in the RSC selection information and determines that the RSC is the target RSC.

Case 2: When the RSD does not include the first indication information, the RSD needs to include the RSC selection information.

For example, when the RSD does not include the ProSe Layer-3 UE-to-Network Relay Offload indication, the RSD needs to include the RSC selection information. The RSC selection information includes one or more RSCs. The terminal (for example, remoter UE) selects one RSC in the RSC selection information.

### 2. Enhanced traffic descriptor (traffic descriptor, TD)

The enhanced TD means including a TD in a URSP. The TD includes at least one of the following:
(1) RSC selection information, where the RSC selection information includes at least one RSC.
(2) Connection capabilities (Connection Capabilities) information, where the connection capabilities information is used to indicate a connection capability parameter including a relay type.
(3) Second indication information, where the second indication information is used to indicate that application traffic of the terminal is sent by a relay terminal not in a PDU session when the terminal matches the TD. Optionally, the second indication information is used to indicate that the relay terminal is a layer-3 UE-to-network relay.

Herein, the following three cases are described below separately.

Case 1: The TD includes an RSC selection information component, where the RSC selection information component includes the RSC selection information, and the RSC selection information includes one or more RSCs. A description of the RSC selection information component is: This is matched against the relay service code information provided by the application. To be specific, an application directly provides one RSC, and when an RSC in the TD (the TD is configured to UE along with the URSP) matches the RSC provided by the application, the terminal (for example, remote UE) selects the matched RSC for a subsequent relay discovery procedure.

Optionally, in Case 1, the terminal (for example, remote UE) may skip a procedure of performing matching on an RSD. Alternatively, the terminal performs matching on an RSD, and in this case, the RSD includes only the ProSe Layer-3 UE-to-Network Relay Offload indication.

In the implementation in which the TD includes the RSC selection information, an implementation in which the terminal determines the target RSC based on the first policy information may include: The terminal determines the target RSC based on the RSC selection information.

If the RSC selection information includes a plurality of RSCs, RSC selection depends on terminal implementation. In other words, that the terminal determines the target RSC based on the RSC selection information depends on terminal implementation.

The terminal implementation includes any one of the following:
(a) The terminal selects one RSC in the RSC selection information based on application information of an application and determines that the RSC is the target RSC.
(b) The terminal selects an N^{th} RSC in the RSC selection information and determines that the RSC is the target RSC, where N is a positive integer.

For example, the terminal selects the first RSC in the RSC selection information and determines that the RSC is the target RSC; or the terminal randomly selects one RSC in the RSC selection information and determines that the RSC is the target RSC.

Case 2: The TD includes the connection capabilities information, where the connection capabilities information is used to indicate a connection capability parameter including a relay type. When an application (APP) needs the terminal to use a relay service, the application or the terminal sets a value (or a parameter) of the connection capabilities information to the relay type, for example, to "relaying". For example, a value of Connection Capabilities is set to "relaying".

Optionally, the connection capabilities information may include ims, mms, internet, relaying.

In the implementation in which the TD includes the connection capabilities information, an implementation in which the terminal determines the target RSC based on the first policy information includes any one of the following:

Implementation 1: The terminal determines the target RSC based on connection capabilities information provided by an application and a second mapping relationship, where the second mapping relationship is used to indicate a correspondence between the connection capabilities information and an RSC.

Optionally, the first policy information includes at least one of the ProSeP, the V2XP, and the UAVP, and at least one of the ProSeP, the V2XP, and the UAVP includes the second mapping relationship.

Implementation 2: The terminal determines the target RSC based on the connection capabilities information provided by the application, the first mapping relationship, and a third mapping relationship, where the first mapping relationship is used to indicate the correspondence between the PDU session parameter and an RSC, and the third mapping relationship is used to indicate a correspondence between the connection capabilities information and the PDU session parameter.

Optionally, the first policy information includes at least one of the ProSeP, the V2XP, and the UAVP, and at least one of the ProSeP, the V2XP, and the UAVP includes at least one of the following: the first mapping relationship; and the third mapping relationship.

Case 3: The TD includes the second indication information. Optionally, the second indication information is a ProSe Layer-3 UE-to-Network Relay Offload indication.

For example, the ProSe Layer-3 UE-to-Network Relay Offload indication is added in the TD, and the RSD does not include the ProSe Layer-3 UE-to-Network Relay Offload indication. The RSD needs to include the PDU session parameter, where the PDU session parameter includes at least one of the following:
SSC mode selection information;
network slice selection information;
DNN selection information;
PDU session type selection information; and
access type preference information.

In the implementation in which the TD includes the second indication information, an implementation in which the terminal determines the target RSC based on the first policy information may include: The terminal determines the target RSC based on the PDU session parameter and the first mapping relationship, where the first mapping relationship is used to indicate the correspondence between the PDU session parameter and an RSC.

Optionally, the first policy information includes at least one of the ProSeP, the V2XP, and the UAVP, and at least one of the ProSeP, the V2XP, and the UAVP includes the first mapping relationship.

For example, when the TD includes the second indication information, the terminal determines the target RSC based on the PDU session parameter included in the RSD and the first mapping relationship included in the ProSeP.

Optionally, the URSP includes the RSD and the TD, the URSP satisfies any one of the following:

The TD includes the RSC selection information, and the RSD does not include the RSC selection information;
the TD does not include the RSC selection information, and the RSD includes the RSC selection information;
the TD includes the second indication information, and the RSD does not include the first indication information; and
the TD does not include the second indication information, and the RSD includes the first indication information.

### 3. Enhanced ProSeP

An implementation with the enhanced ProSeP means including a ProSeP in first policy information. The ProSeP includes at least one of the following:
a first mapping relationship;
a second mapping relationship;
a third mapping relationship;
a fourth mapping relationship;
a fifth mapping relationship;
a sixth mapping relationship; and
a seventh mapping relationship, where
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

Herein, the following two cases are described below separately.

Case 1: The fourth mapping relationship is included in a policy (for example, the ProSeP) for a relay-related service configured by the network side device (for example, a PCF) to the terminal (for example, remote UE), where the fourth mapping relationship is used to indicate the correspondence between the TD component and the RSC.

When the ProSeP includes the fourth mapping relationship, an implementation in which the terminal determines the target RSC based on the first policy information may include: The terminal determines the target RSC based on the TD component and the fourth mapping relationship.

Case 2: The first mapping relationship and the fifth mapping relationship are included in a policy (for example, the ProSeP) for a relay-related service configured by the network side device (for example, a PCF) to the terminal (for example, remote UE), where the first mapping relationship is used to indicate the correspondence between the PDU session parameter and the RSC, and the fifth mapping relationship is used to indicate a correspondence between the TD component and the PDU session parameter.

When the ProSeP includes the first mapping relationship and the fifth mapping relationship, an implementation in which the terminal determines the target RSC based on the first policy information may include: The terminal determines the target RSC based on the TD component, the first mapping relationship, and the fifth mapping relationship.

Optionally, the TD component may include at least one of the following:
RSC selection information;
application descriptors (Application descriptors) information, where the application descriptors information includes at least one of the following: an OSId, an OSAppId, a ProSe identifier, and application ID;
IP descriptors (IP descriptors) information, where the IP descriptors information includes a target IP triplet (a target IP address or IPv6 network prefix, a target port number, and a protocol ID of an IP protocol);
domain descriptors (Domain descriptors) information, the domain descriptors information includes an FQDN or an expression for a domain name matching criterion;
non-IP descriptors (Non-IP descriptors) information, where the non-IP descriptors information includes a target information descriptor during non-IP data transmission;
data network name (DNN) information; and
connection capabilities information.

Optionally, in the implementation with the enhanced ProSeP, the terminal (for example, remote UE) may skip a procedure of performing matching on an RSD. Alternatively, the terminal performs matching on an RSD, and in this case, the RSD includes only the ProSe Layer-3 UE-to-Network Relay Offload indication.

### 4. Enhanced ProSeP and path selection policy

The enhanced ProSeP and the path selection policy mean including a ProSeP in first policy information. The ProSeP includes at least one of the following:
a first mapping relationship;
a sixth mapping relationship; and
a seventh mapping relationship, where
the first mapping relationship is used to indicate a correspondence between a PDU session parameter and an RSC, the sixth mapping relationship is used to indicate a correspondence between application information and the RSC, and the seventh mapping relationship is used to indicate a correspondence between the application information and the PDU session parameter.

Optionally, the ProSeP includes the path selection policy (Path selection policy). The path selection policy includes a mapping relationship between an application identifier (ProSe identifiers) and a path preference. The path preference may include PC5 preferred (PC5 preferred), Uu preferred (Uu preferred), or no preference.

Herein, the following two cases are described below separately.

Case 1: The sixth mapping relationship is included in a policy (for example, the ProSeP) for a relay-related service configured by the network side device (for example, a PCF) to the terminal (for example, remote UE), where the sixth mapping relationship is used to indicate the correspondence between the application information and the RSC.

When the ProSeP includes the sixth mapping relationship, an implementation in which the terminal determines the target RSC based on the first policy information may include: The terminal determines the target RSC based on the application information of an application and the sixth mapping relationship.

For example, when the path preference of the application is PC5 preferred or no preference, the terminal determines the target RSC based on the application information of an application and the sixth mapping relationship; and then performs a relay discovery procedure based on the target RSC.

Case 2: The first mapping relationship and the seventh mapping relationship are included in a policy (for example, the ProSeP) for a relay-related service configured by the network side device (for example, a PCF) to the terminal (for example, remote UE), where the first mapping relationship is used to indicate the correspondence between the PDU session parameter and the RSC, and the seventh mapping relationship is used to indicate the correspondence between the application information and the PDU session parameter.

When the ProSeP includes the first mapping relationship and the seventh mapping relationship, an implementation in which the terminal determines the target RSC based on the first policy information may include: The terminal determines the target RSC based on the application information of an application, the first mapping relationship, and the seventh mapping relationship. The first mapping relationship is used to indicate the correspondence between the PDU session parameter and the RSC, and the seventh mapping relationship is used to indicate the correspondence between the application information and the PDU session parameter.

For example, when the path preference of the application is PC5 preferred or no preference, the terminal determines the target RSC based on the application information of the application, the first mapping relationship, and the seventh mapping relationship; and then performs a relay discovery procedure based on the target RSC.

Optionally, when the enhanced ProSeP and the path selection policy are used, the terminal skips performing matching on a URSP. In other words, the terminal skips a procedure of matching a TD and an RSD in the URSP.

Optionally, the application information may include at least one of the following:
RSC selection information;
application descriptors information;
IP descriptors information;
domain descriptors information;
non-IP descriptors information;
DNN information;
connection capabilities information;
SSC mode selection information;
network slice selection information;
DNN selection information;
PDU session type selection information; and
access type preference information.

FIG. 3 is a second schematic flowchart of an RSC determining method according to an embodiment of this application. As shown in FIG. 3, the method includes the following steps.

Step 301: A network side device sends first policy information to a terminal, where the first policy information is used to indicate a target RSC.

It should be noted that embodiments of this application may be applied to a relay communication scenario, to resolve a problem that a terminal (for example, remote UE) cannot select a suitable RSC.

Optionally, the first policy information includes at least one of the following: a ProSeP; and a URSP.

In the RSC determining method in this embodiment of this application, the network side device sends the first policy information to the terminal, where the first policy information is used to indicate the target RSC. After receiving the first policy information sent by the network side device, the terminal can determine the target RSC based on the first policy information. Then, the terminal triggers, based on the target RSC, a relay UE discovery procedure, to discover relay UE, so that the terminal uses the relay UE for a relay service.

In this embodiment of this application, the first policy information includes at least one of the following:
a proximity-based services policy ProSeP;
a user equipment route selection policy URSP;
a vehicle-to-everything policy V2XP; and
an unmanned aerial vehicle policy UAVP.

Optionally, the URSP includes a route selection descriptor RSD, and the RSD includes at least one of the following:
first indication information;
RSC selection information; and
a protocol data unit PDU session parameter, where
the first indication information is used to indicate that application traffic of the terminal is sent by a relay terminal not in a PDU session when the terminal matches the RSD, and the RSC selection information includes at least one RSC.

Actually, the first indication information is used to indicate that the relay terminal is a layer-3 UE-to-network relay.

Optionally, the URSP includes a traffic descriptor TD, and the TD includes at least one of the following:
RSC selection information;
connection capabilities Connection Capabilities information; and
second indication information, where
the RSC selection information includes at least one RSC, the connection capabilities information is used to indicate a connection capability parameter including a relay type, and the second indication information is used to indicate that application traffic of the terminal is sent by a relay terminal not in a PDU session when the terminal matches the TD.

Actually, the second indication information is used to indicate that the relay terminal is a layer-3 UE-to-network relay.

Optionally, the first policy information includes the ProSeP. The ProSeP includes at least one of the following:
a first mapping relationship;
a second mapping relationship;
a third mapping relationship;
a fourth mapping relationship;
a fifth mapping relationship;
a sixth mapping relationship; and
a seventh mapping relationship, where
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

Optionally, the URSP includes the RSD and the TD, the URSP satisfies any one of the following:
The TD includes the RSC selection information, and the RSD does not include the RSC selection information;
the TD does not include the RSC selection information, and the RSD includes the RSC selection information;
the TD includes the second indication information, and the RSD does not include the first indication information; and
the TD does not include the second indication information, and the RSD includes the first indication information.

The RSC determining method provided in this embodiment of this application may be performed by an RSC determining apparatus. In embodiments of this application, that the RSC determining apparatus performs the RSC determining method is used as an example to describe the RSC determining apparatus provided in embodiments of this application.

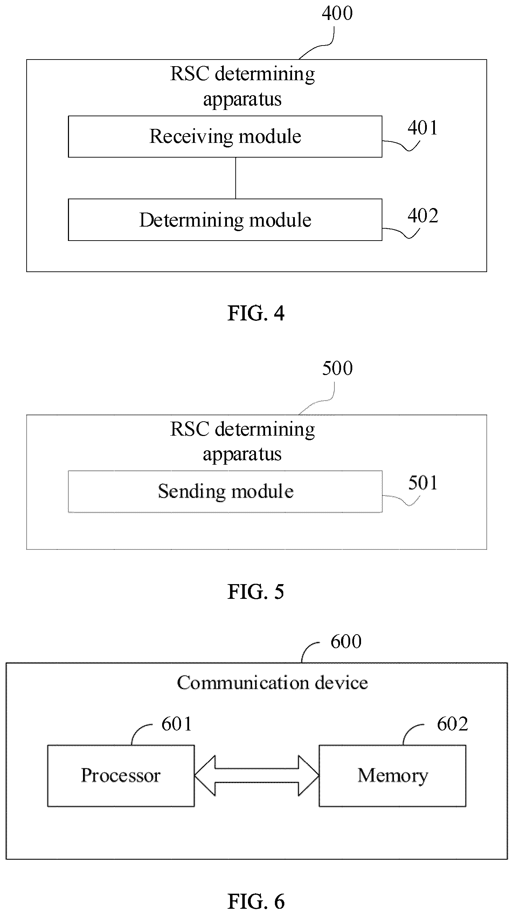

FIG. 4 is a first schematic diagram of a structure of an RSC determining apparatus according to an embodiment of this application. As shown in FIG. 4, the RSC determining apparatus 400 is used in a terminal and includes:
a receiving module 401, configured to receive first policy information sent by a network side device, where the first policy information is used to indicate a target RSC; and
a determining module 402, configured to determine the target RSC based on the first policy information.

In the RSC determining apparatus in this embodiment of this application, after the first policy information sent by the network side device is received, the target RSC can be determined based on the first policy information. Then, a relay UE discovery procedure is triggered based on the target RSC to discover relay UE, so that the relay UE is used for a relay service.

Optionally, the first policy information includes at least one of the following:
a proximity-based services policy ProSeP;
a user equipment route selection policy URSP;
a vehicle-to-everything policy V2XP; and
an unmanned aerial vehicle policy UAVP.

Optionally, the URSP includes a route selection descriptor RSD, and the RSD includes at least one of the following:
first indication information;
RSC selection information; and
a protocol data unit PDU session parameter, where
the first indication information is used to indicate that application traffic of the terminal is sent by a relay terminal not in a PDU session when the terminal matches the RSD, and the RSC selection information includes at least one RSC.

Optionally, the first indication information is used to indicate that the relay terminal is a layer-3 UE-to-network relay.

The determining module 402 is specifically configured for any one of the following:
determining the target RSC based on the PDU session parameter and a first mapping relationship; and
determining the target RSC based on the RSC selection information, where
the first mapping relationship is used to indicate a correspondence between the PDU session parameter and an RSC.

Optionally, the first policy information includes at least one of the ProSeP, the V2XP, and the UAVP, and at least one of the ProSeP, the V2XP, and the UAVP includes the first mapping relationship.

Optionally, the URSP includes a traffic descriptor TD, and the TD includes at least one of the following:
RSC selection information;
connection capabilities Connection Capabilities information; and
second indication information, where
the RSC selection information includes at least one RSC, the connection capabilities information is used to indicate a connection capability parameter including a relay type, and the second indication information is used to indicate that application traffic of the terminal is sent by a relay terminal not in a PDU session when the terminal matches the TD.

Optionally, the second indication information is used to indicate that the relay terminal is a layer-3 UE-to-network relay.

The determining module 402 is specifically configured for any one of the following:
determining the target RSC based on the RSC selection information;
determining the target RSC based on connection capabilities information provided by an application and a second mapping relationship;
determining the target RSC based on the connection capabilities information provided by the application, a first mapping relationship, and a third mapping relationship; and
determining the target RSC based on a PDU session parameter and the first mapping relationship, where
the first mapping relationship is used to indicate a correspondence between the PDU session parameter and an RSC, the second mapping relationship is used to indicate a correspondence between the connection capabilities information and the RSC, and the third mapping relationship is used to indicate a correspondence between the connection capabilities information and the PDU session parameter.

Optionally, the first policy information includes at least one of the ProSeP, the V2XP, and the UAVP, and at least one of the ProSeP, the V2XP, and the UAVP includes at least one of the following:
the first mapping relationship;
the second mapping relationship; and
the third mapping relationship.

Optionally, the first policy information includes the ProSeP. The ProSeP includes at least one of the following:
a first mapping relationship;
a second mapping relationship;
a third mapping relationship;
a fourth mapping relationship;
a fifth mapping relationship;
a sixth mapping relationship; and
a seventh mapping relationship, where
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

The determining module 402 is specifically configured for any one of the following:
determining the target RSC based on the TD component and the fourth mapping relationship; and
determining the target RSC based on the TD component, the first mapping relationship, and the fifth mapping relationship.

Optionally, the RSC determining apparatus 400 skips performing matching on an RSD.

The determining module 402 is specifically configured for any one of the following:
determining the target RSC based on the application information of an application and the sixth mapping relationship; and
determining the target RSC based on the application information of the application, the first mapping relationship, and the seventh mapping relationship.

Optionally, a path preference of the application is PC5 preferred or no preference.

Optionally, the RSC determining apparatus 400 skips performing matching on a URSP.

Optionally, the TD component includes at least one of the following:
RSC selection information;
application descriptors Application descriptors information;
IP descriptors IP descriptors information;
domain descriptors Domain descriptors information;
non-IP descriptors Non-IP descriptors information;
data network name DNN information; and
connection capabilities information.

Optionally, the URSP includes the RSD and the TD, the URSP satisfies any one of the following:

The TD includes the RSC selection information, and the RSD does not include the RSC selection information;
the TD does not include the RSC selection information, and the RSD includes the RSC selection information;
the TD includes the second indication information, and the RSD does not include the first indication information; and
the TD does not include the second indication information, and the RSD includes the first indication information.

Optionally, the PDU session parameter includes at least one of the following:
session and service continuity mode selection SSC Mode Selection information;
network slice selection Network Slice Selection information;
data network name selection DNN Selection information;
PDU session type selection PDU Session Type Selection information; and
access type preference Access Type preference information.

Optionally, the application information includes at least one of the following:
RSC selection information;
application descriptors Application descriptors information;
IP descriptors IP descriptors information;
domain descriptors Domain descriptors information;
non-IP descriptors Non-IP descriptors information;
data network name DNN information;
connection capabilities information;
session and service continuity mode selection SSC Mode Selection information;
network slice selection Network Slice Selection information;
data network name selection DNN Selection information;
PDU session type selection PDU Session Type Selection information; and
access type preference Access Type preference information.

The RSC determining apparatus in this embodiment of this application may be an electronic device, for example, an electronic device with an operating system, or may be a component in an electronic device, for example, an integrated circuit or a chip. The electronic device may be a terminal, or another device other than the terminal. For example, the terminal may include but is not limited to the terminal 11 of the foregoing listed types. The another device may be a server, a network attached storage (Network Attached Storage, NAS), or the like. This is not specifically limited in this embodiment of this application.

The RSC determining apparatus provided in this embodiment of this application can implement the processes implemented in the method embodiment of FIG. 2, and same technical effect can be achieved. To avoid repetition, details are not described herein again.

FIG. 5 is a second schematic diagram of a structure of an RSC determining apparatus according to an embodiment of this application. As shown in FIG. 5, the RSC determining apparatus 500 is used in a network side device and includes:
a sending module 501, configured to send first policy information to a terminal, where the first policy information is used to indicate a target RSC.

In the RSC determining apparatus in this embodiment of this application, the first policy information is sent to the terminal, where the first policy information is used to indicate the target RSC. After receiving the first policy information sent by the network side device, the terminal can determine the target RSC based on the first policy information. Then, the terminal triggers, based on the target RSC, a relay UE discovery procedure, to discover relay UE, so that the terminal uses the relay UE for a relay service.

Optionally, the first policy information includes at least one of the following:
a proximity-based services policy ProSeP;
a user equipment route selection policy URSP;
a vehicle-to-everything policy V2XP; and
an unmanned aerial vehicle policy UAVP.

Optionally, the URSP includes a route selection descriptor RSD, and the RSD includes at least one of the following:
first indication information;
RSC selection information; and
a protocol data unit PDU session parameter, where
the first indication information is used to indicate that application traffic of the terminal is sent by a relay terminal not in a PDU session when the terminal matches the RSD, and the RSC selection information includes at least one RSC.

Optionally, the first indication information is used to indicate that the relay terminal is a layer-3 UE-to-network relay.

Optionally, the URSP includes a traffic descriptor TD, and the TD includes at least one of the following:
RSC selection information;
connection capabilities Connection Capabilities information; and
second indication information, where
the RSC selection information includes at least one RSC, the connection capabilities information is used to indicate a connection capability parameter including a relay type, and the second indication information is used to indicate that application traffic of the terminal is sent by a relay terminal not in a PDU session when the terminal matches the TD.

Optionally, the second indication information is used to indicate that the relay terminal is a layer-3 UE-to-network relay.

Optionally, the first policy information includes the ProSeP. The ProSeP includes at least one of the following:
a first mapping relationship;
a second mapping relationship;
a third mapping relationship;
a fourth mapping relationship;
a fifth mapping relationship;
a sixth mapping relationship; and
a seventh mapping relationship, where
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

Optionally, the URSP includes the RSD and the TD, the URSP satisfies any one of the following:
The TD includes the RSC selection information, and the RSD does not include the RSC selection information;
the TD does not include the RSC selection information, and the RSD includes the RSC selection information;
the TD includes the second indication information, and the RSD does not include the first indication information; and
the TD does not include the second indication information, and the RSD includes the first indication information.

The RSC determining apparatus provided in this embodiment of this application can implement the processes implemented in the method embodiment of FIG. 3, and same technical effect can be achieved. To avoid repetition, details are not described herein again.

The RSC determining apparatus in this embodiment of this application may be an electronic device, or may be a component in the electronic device, for example, an integrated circuit or a chip. The electronic device may be a terminal, or may be a device other than the terminal. For example, the electronic device may be a mobile phone, a tablet computer, a laptop computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The RSC determining apparatus in this embodiment of this application may be an apparatus with an operating system. The operating system may be an Android (Android) operating system, an iOS operating system, or another possible operating system. This is not specifically limited in this embodiment of this application.

FIG. 6 is a schematic diagram of a structure of a communication device according to an embodiment of this application. As shown in FIG. 6, the communication device 600 includes a processor 601 and a memory 602. A program or instructions capable of being run on the processor 601 are stored in the memory 602. For example, when the communication device 600 is a terminal, the program or the instructions are executed by the processor 601 to implement steps of the foregoing RSC determining method embodiments on a terminal side, and same technical effect can be achieved. When the communication device 600 is a network side device, the program or the instructions are executed by the processor 601 to implement steps of the foregoing RSC determining method embodiments, and same technical effect can be achieved. To avoid repetition, details are not described herein again.

An embodiment of this application further provides a terminal, including a processor and a communication interface. The communication interface is configured to receive first policy information sent by a network side device, where the first policy information is used to indicate a target RSC; and the processor is configured to determine the target RSC based on the first policy information. The terminal embodiment corresponds to the terminal side method embodiment, each implementation process and implementation of the method embodiment can be applied to the terminal embodiment, and same technical effect can be achieved.

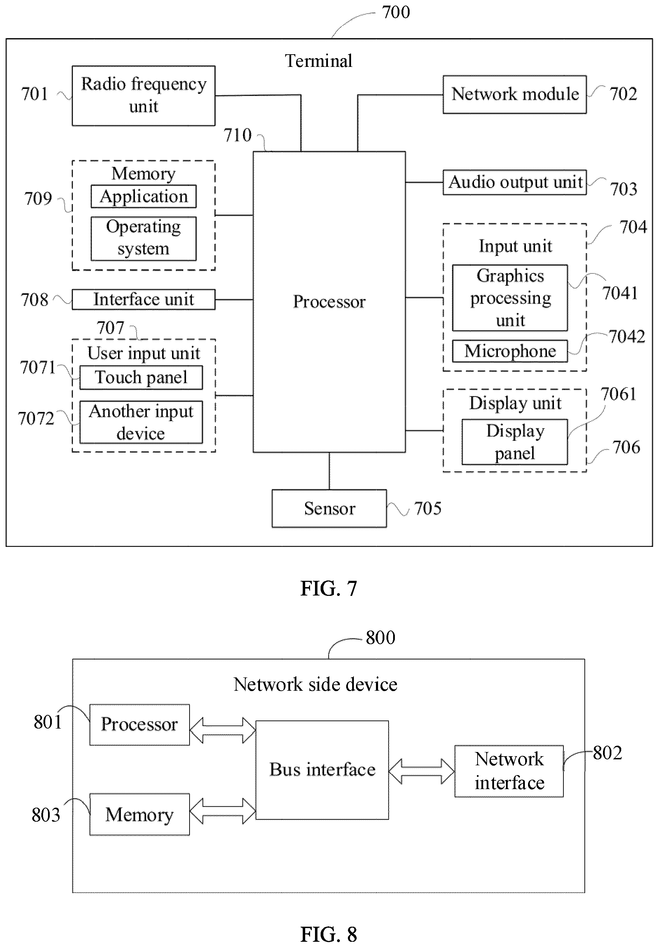

FIG. 7 is a schematic diagram of a structure of a terminal according to an embodiment of this application. As shown in FIG. 7, the terminal 700 includes but is not limited to at least a part of the following components: a radio frequency unit 701, a network module 702, an audio output unit 703, an input unit 704, a sensor 705, a display unit 706, a user input unit 707, an interface unit 708, a memory 709, a processor 710, and the like.

A person skilled in the art can understand that the terminal 700 may further include a power supply (for example, a battery) that supplies power to each component. The power supply may be logically connected to the processor 710 by using a power supply management system, to implement functions such as charging and discharging management and power consumption management by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and the radio frequency unit 701 may send uplink data to the network side device. Usually, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area for storing a program or an instruction and a second storage area for storing data. The first storage area may store an operating system, and an application or an instruction required by at least one function (for example, a sound playing function or an image playing function). In addition, the memory 709 may be a volatile memory or a non-volatile memory, or the memory 709 may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any memory of another proper type.

The processor 710 may include one or more processing units. Optionally, an application processor and a modem processor may be integrated into the processor 710. The application processor mainly processes an operating system, a user interface, an application, and the like. The modem processor mainly processes a wireless communication signal, for example, a baseband processor. It may be understood that, alternatively, the modem processor may not be integrated into the processor 710.

The radio frequency unit 701 is configured to receive first policy information sent by a network side device, where the first policy information is used to indicate a target RSC.

The processor 710 is configured to Processor target RSC based on the first policy information.

After receiving the first policy information sent by the network side device, the terminal provided in this embodiment of this application can determine the target RSC based on the first policy information. Then, the terminal triggers, based on the target RSC, a relay UE discovery procedure, to discover relay UE, so that the terminal uses the relay UE for a relay service.

An embodiment of this application further provides a network side device, including a processor and a communication interface. The communication interface is configured to send first policy information to a terminal, where the first policy information is used to indicate a target RSC. This network side device embodiment corresponds to the foregoing method embodiment of the network side device. Each implementation process and implementation of the foregoing method embodiment may be applicable to this network side device embodiment, and same technical effect can be achieved.

FIG. 8 is a schematic diagram of a structure of a network side device according to an embodiment of this application. As shown in FIG. 8, the network side device 800 includes a processor 801, a network interface 802, and a memory 803. The network interface 802 is, for example, a common public radio interface (common public radio interface, CPRI).

Specifically, the network side device 800 in this embodiment of the present invention further includes instructions or a program that is stored in the memory 803 and that is capable of being run on the processor 801. The processor 801 invokes the instructions or the program in the memory 803 to perform the method shown in FIG. 3, and same technical effect can be achieved. To avoid repetition, details are not described herein again.

An embodiment of this application further provides an RSC determining system, including a terminal and a network side device. The terminal may be configured to perform steps of the foregoing RSC determining method, and the network side device may be configured to perform steps of the foregoing RSC determining method.

An embodiment of this application further provides a readable storage medium. The readable storage medium may be volatile or non-volatile. The readable storage medium stores a program or instructions, and the program or the instructions are executed by a processor to implement the processes of the foregoing RSC determining method embodiments, and same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes of the foregoing RSC determining method embodiments, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the foregoing RSC determining method embodiments, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a ..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in embodiments of this application.

Embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A relay service code RSC determining method, comprising:
receiving, by a terminal, first policy information sent by a network side device, wherein the first policy information is used to indicate a target RSC; and
determining, by the terminal, the target RSC based on the first policy information.

2. The RSC determining method according to claim 1, wherein the first policy information comprises at least one of the following:
a proximity-based services policy ProSeP;
a user equipment route selection policy URSP;
a vehicle-to-everything policy V2XP; and
an unmanned aerial vehicle policy UAVP.

3. The RSC determining method according to claim 2, wherein the URSP comprises a route selection descriptor RSD, and the RSD comprises at least one of the following:
first indication information;
RSC selection information; and
a protocol data unit PDU session parameter, wherein
the first indication information is used to indicate that application traffic of the terminal is sent by a relay terminal not in a PDU session when the terminal matches the RSD, and the RSC selection information comprises at least one RSC.

4. The RSC determining method according to claim 3, wherein the first indication information is used to indicate that the relay terminal is a layer-3 UE-to-network relay Layer-3 UE-to-Network Relay.

5. The RSC determining method according to claim 3, wherein the determining, by the terminal, the target RSC based on the first policy information comprises any one of the following:
determining, by the terminal, the target RSC based on the PDU session parameter and a first mapping relationship; and
determining, by the terminal, the target RSC based on the RSC selection information, wherein
the first mapping relationship is used to indicate a correspondence between the PDU session parameter and an RSC.

6. The RSC determining method according to claim 5, wherein the first policy information comprises at least one of the ProSeP, the V2XP, and the UAVP, and at least one of the ProSeP, the V2XP, and the UAVP comprises the first mapping relationship.

7. The RSC determining method according to claim 2, wherein the URSP comprises a traffic descriptor TD, and the TD comprises at least one of the following:
RSC selection information; and
connection capabilities Connection Capabilities information; and
second indication information, wherein
the RSC selection information comprises at least one RSC, the connection capabilities information is used to indicate a connection capability parameter comprising a relay type, and the second indication information is used to indicate that application traffic of the terminal is sent by a relay terminal not in a PDU session when the terminal matches the TD.

8. The RSC determining method according to claim 7, wherein the second indication information is used to indicate that the relay terminal is a layer-3 UE-to-network relay Layer-3 UE-to-Network Relay.

9. The RSC determining method according to claim 7, wherein the determining, by the terminal, the target RSC based on the first policy information comprises any one of the following:
determining, by the terminal, the target RSC based on the RSC selection information;
determining, by the terminal, the target RSC based on connection capabilities information provided by an application and a second mapping relationship;
determining, by the terminal, the target RSC based on the connection capabilities information provided by the application, a first mapping relationship, and a third mapping relationship; and
determining, by the terminal, the target RSC based on a PDU session parameter and the first mapping relationship, wherein
the first mapping relationship is used to indicate a correspondence between the PDU session parameter and an RSC, the second mapping relationship is used to indicate a correspondence between the connection capabilities information and the RSC, and the third mapping relationship is used to indicate a correspondence between the connection capabilities information and the PDU session parameter.

10. The RSC determining method according to claim 9, wherein the first policy information comprises at least one of the ProSeP, the V2XP, and the UAVP, and at least one of the ProSeP, the V2XP, and the UAVP comprises at least one of the following:
the first mapping relationship;
the second mapping relationship; and
the third mapping relationship.

11. The RSC determining method according to claim 2, wherein the first policy information comprises the ProSeP, and the ProSeP comprises at least one of the following:
a first mapping relationship;
a second mapping relationship;
a third mapping relationship;
a fourth mapping relationship;
a fifth mapping relationship;
a sixth mapping relationship; and
a seventh mapping relationship, wherein
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

12. The RSC determining method according to claim 11, wherein the determining, by the terminal, the target RSC based on the first policy information comprises any one of the following:
determining, by the terminal, the target RSC based on the TD component and the fourth mapping relationship; and
determining, by the terminal, the target RSC based on the TD component, the first mapping relationship, and the fifth mapping relationship.

13. The RSC determining method according to claim 9 or 12, wherein the terminal skips performing matching on an RSD.

14. The RSC determining method according to claim 11, wherein the determining, by the terminal, the target RSC based on the first policy information comprises any one of the following:
determining, by the terminal, the target RSC based on the application information of an application and the sixth mapping relationship; and
determining, by the terminal, the target RSC based on the application information of the application, the first mapping relationship, and the seventh mapping relationship.

15. The RSC determining method according to claim 14, wherein a path preference of the application is PC5 preferred or no preference.

16. The RSC determining method according to claim 14, wherein the terminal skips performing matching on a URSP.

17. The RSC determining method according to claim 11 or 12, wherein the TD component comprises at least one of the following:
RSC selection information;
application descriptors Application descriptors information;
IP descriptors IP descriptors information;
domain descriptors Domain descriptors information;
non-IP descriptors Non-IP descriptors information;
data network name DNN information; and
connection capabilities information.

18. The RSC determining method according to any one of claims 2 to 17, wherein the URSP comprises the RSD and the TD, and the URSP satisfies any one of the following:
the TD comprises the RSC selection information, and the RSD does not comprise the RSC selection information;
the TD does not comprise the RSC selection information, and the RSD comprises the RSC selection information;
the TD comprises the second indication information, and the RSD does not comprise the first indication information; and
the TD does not comprise the second indication information, and the RSD comprises the first indication information.

19. The RSC determining method according to claim 3, 5, 9, or 11, wherein the PDU session parameter comprises at least one of the following:
session and service continuity mode selection SSC Mode Selection information;
network slice selection Network Slice Selection information;
data network name selection DNN Selection information;
PDU session type selection PDU Session Type Selection information; and
access type preference Access Type preference information.

20. The RSC determining method according to claim 11 or 14, wherein the application information comprises at least one of the following:
RSC selection information;
application descriptors Application descriptors information;
IP descriptors IP descriptors information;
domain descriptors Domain descriptors information;
non-IP descriptors Non-IP descriptors information;
data network name DNN information;
connection capabilities information;
session and service continuity mode selection SSC Mode Selection information;
network slice selection Network Slice Selection information;
data network name selection DNN Selection information;
PDU session type selection PDU Session Type Selection information; and
access type preference Access Type preference information.

21. A relay service code RSC determining method, comprising:
sending, by a network side device, first policy information to a terminal, wherein the first policy information is used to indicate a target RSC.

22. The RSC determining method according to claim 21, wherein the first policy information comprises at least one of the following:
a proximity-based services policy ProSeP;
a user equipment route selection policy URSP;
a vehicle-to-everything policy V2XP; and
an unmanned aerial vehicle policy UAVP.

23. The RSC determining method according to claim 22, wherein the URSP comprises a route selection descriptor RSD, and the RSD comprises at least one of the following:
first indication information;
RSC selection information; and
a protocol data unit PDU session parameter, wherein
the first indication information is used to indicate that application traffic of the terminal is sent by a relay terminal not in a PDU session when the terminal matches the RSD, and the RSC selection information comprises at least one RSC.

24. The RSC determining method according to claim 23, wherein the first indication information is used to indicate that the relay terminal is a layer-3 UE-to-network relay Layer-3 UE-to-Network Relay.

25. The RSC determining method according to claim 22, wherein the URSP comprises a traffic descriptor TD, and the TD comprises at least one of the following:
RSC selection information;
connection capabilities Connection Capabilities information; and
second indication information, wherein
the RSC selection information comprises at least one RSC, the connection capabilities information is used to indicate a connection capability parameter comprising a relay type, and the second indication information is used to indicate that application traffic of the terminal is sent by a relay terminal not in a PDU session when the terminal matches the TD.

26. The RSC determining method according to claim 25, wherein the second indication information is used to indicate that the relay terminal is a layer-3 UE-to-network relay Layer-3 UE-to-Network Relay.

27. The RSC determining method according to claim 22, wherein the first policy information comprises the ProSeP, and the ProSeP comprises at least one of the following:
a first mapping relationship;
a second mapping relationship;
a third mapping relationship;
a fourth mapping relationship;
a fifth mapping relationship;
a sixth mapping relationship; and
a seventh mapping relationship, wherein
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

28. The RSC determining method according to any one of claims 22 to 27, wherein the URSP comprises the RSD and the TD, and the URSP satisfies any one of the following:
the TD comprises the RSC selection information, and the RSD does not comprise the RSC selection information;
the TD does not comprise the RSC selection information, and the RSD comprises the RSC selection information;
the TD comprises the second indication information, and the RSD does not comprise the first indication information; and
the TD does not comprise the second indication information, and the RSD comprises the first indication information.

29. An RSC determining apparatus, comprising:
a receiving module, configured to receive first policy information sent by a network side device, wherein the first policy information is used to indicate a target RSC; and
a determining module, configured to determine the target RSC based on the first policy information.

30. The RSC determining apparatus according to claim 29, wherein the first policy information comprises at least one of the following:
a proximity-based services policy ProSeP;
a user equipment route selection policy URSP;
a vehicle-to-everything policy V2XP; and
an unmanned aerial vehicle policy UAVP.

31. The RSC determining apparatus according to claim 30, wherein the URSP comprises a route selection descriptor RSD, and the RSD comprises at least one of the following:
first indication information;
RSC selection information; and
a protocol data unit PDU session parameter, wherein
the first indication information is used to indicate that application traffic of the terminal is sent by a relay terminal not in a PDU session when the terminal matches the RSD, and the RSC selection information comprises at least one RSC.

32. The RSC determining apparatus according to claim 31, wherein the first indication information is used to indicate that the relay terminal is a layer-3 UE-to-network relay Layer-3 UE-to-Network Relay.

33. The RSC determining apparatus according to claim 31, wherein the determining module is specifically configured for any one of the following:
determining the target RSC based on the PDU session parameter and a first mapping relationship; and
determining the target RSC based on the RSC selection information, wherein
the first mapping relationship is used to indicate a correspondence between the PDU session parameter and an RSC.

34. The RSC determining apparatus according to claim 33, wherein the first policy information comprises at least one of the ProSeP, the V2XP, and the UAVP, and at least one of the ProSeP, the V2XP, and the UAVP comprises the first mapping relationship.

35. The RSC determining apparatus according to claim 30, wherein the URSP comprises a traffic descriptor TD, and the TD comprises at least one of the following:
RSC selection information;
connection capabilities Connection Capabilities information; and
second indication information, wherein
the RSC selection information comprises at least one RSC, the connection capabilities information is used to indicate a connection capability parameter comprising a relay type, and the second indication information is used to indicate that application traffic of the terminal is sent by a relay terminal not in a PDU session when the terminal matches the TD.

36. The RSC determining apparatus according to claim 35, wherein the second indication information is used to indicate that the relay terminal is a layer-3 UE-to-network relay Layer-3 UE-to-Network Relay.

37. The RSC determining apparatus according to claim 35, wherein the determining module is specifically configured for any one of the following:
determining the target RSC based on the RSC selection information;
determining the target RSC based on connection capabilities information provided by an application and a second mapping relationship;
determining the target RSC based on the connection capabilities information provided by the application, a first mapping relationship, and a third mapping relationship; and
determining the target RSC based on a PDU session parameter and the first mapping relationship, wherein
the first mapping relationship is used to indicate a correspondence between the PDU session parameter and an RSC, the second mapping relationship is used to indicate a correspondence between the connection capabilities information and the RSC, and the third mapping relationship is used to indicate a correspondence between the connection capabilities information and the PDU session parameter.

38. The RSC determining apparatus according to claim 37, wherein the first policy information comprises at least one of the ProSeP, the V2XP, and the UAVP, and at least one of the ProSeP, the V2XP, and the UAVP comprises at least one of the following:
the first mapping relationship;
the second mapping relationship; and
the third mapping relationship.

39. The RSC determining apparatus according to claim 30, wherein the first policy information comprises the ProSeP, and the ProSeP comprises at least one of the following:
a first mapping relationship;
a second mapping relationship;
a third mapping relationship;
a fourth mapping relationship;
a fifth mapping relationship;
a sixth mapping relationship; and
a seventh mapping relationship, wherein
the first mapping relationship is used to indicate a correspondence between the PDU session parameter and an RSC; and
the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

40. The RSC determining apparatus according to claim 39, wherein the determining module is specifically configured for any one of the following:
determining the target RSC based on the TD component and the fourth mapping relationship; and
determining the target RSC based on the TD component, the first mapping relationship, and the fifth mapping relationship.

41. The RSC determining apparatus according to claim 37 or 40, wherein the RSC determining apparatus skips performing matching on an RSD.

42. The RSC determining apparatus according to claim 39, wherein the determining module is specifically configured for any one of the following:
determining the target RSC based on the application information of an application and the sixth mapping relationship; and
determining the target RSC based on the application information of the application, the first mapping relationship, and the seventh mapping relationship.

43. The RSC determining apparatus according to claim 42, wherein a path preference of the application is PC5 preferred or no preference.

44. The RSC determining apparatus according to claim 42, wherein the RSC determining apparatus skips performing matching on a URSP.

45. The RSC determining apparatus according to claim 39 or 40, wherein the TD component comprises at least one of the following:
RSC selection information;
application descriptors Application descriptors information;
IP descriptors IP descriptors information;
domain descriptors Domain descriptors information;
non-IP descriptors Non-IP descriptors information;
data network name DNN information; and
connection capabilities information.

46. The RSC determining apparatus according to any one of claims 30 to 45, wherein the URSP comprises the RSD and the TD, and the URSP satisfies any one of the following:
the TD comprises the RSC selection information, and the RSD does not comprise the RSC selection information;
the TD does not comprise the RSC selection information, and the RSD comprises the RSC selection information;
the TD comprises the second indication information, and the RSD does not comprise the first indication information; and,
the TD does not comprise the second indication information, and the RSD comprises the first indication information.

47. The RSC determining apparatus according to claim 31, 33, 37, or 39, wherein the PDU session parameter comprises at least one of the following:
session and service continuity mode selection SSC Mode Selection information;
network slice selection Network Slice Selection information;
data network name selection DNN Selection information;
PDU session type selection PDU Session Type Selection information; and
access type preference Access Type preference information.

48. The RSC determining apparatus according to claim 39 or 42, wherein the application information comprises at least one of the following:
RSC selection information;
application descriptors Application descriptors information;
IP descriptors IP descriptors information;
domain descriptors Domain descriptors information;
non-IP descriptors Non-IP descriptors information;
data network name DNN information;
connection capabilities information;
session and service continuity mode selection SSC Mode Selection information;
network slice selection Network Slice Selection information;
data network name selection DNN Selection information;
PDU session type selection PDU Session Type Selection information; and
access type preference Access Type preference information.

49. An RSC determining apparatus, comprising:
a sending module, configured to send first policy information to a terminal, wherein the first policy information is used to indicate a target RSC.

50. The RSC determining apparatus according to claim 49, wherein the first policy information comprises at least one of the following:
a proximity-based services policy ProSeP;
a user equipment route selection policy URSP;
a vehicle-to-everything policy V2XP; and
an unmanned aerial vehicle policy UAVP.

51. The RSC determining apparatus according to claim 50, wherein the URSP comprises a route selection descriptor RSD, and the RSD comprises at least one of the following:
first indication information;
RSC selection information; and
a protocol data unit PDU session parameter, wherein
the first indication information is used to indicate that application traffic of the terminal is sent by a relay terminal not in a PDU session when the terminal matches the RSD, and the RSC selection information comprises at least one RSC.

52. The RSC determining apparatus according to claim 51, wherein the first indication information is used to indicate that the relay terminal is a layer-3 UE-to-network relay Layer-3 UE-to-Network Relay.

53. The RSC determining apparatus according to claim 50, wherein the URSP comprises a traffic descriptor TD, and the TD comprises at least one of the following:
RSC selection information;
connection capabilities Connection Capabilities information; and
second indication information, wherein
the RSC selection information comprises at least one RSC, the connection capabilities information is used to indicate a connection capability parameter comprising a relay type, and the second indication information is used to indicate that application traffic of the terminal is sent by a relay terminal not in a PDU session when the terminal matches the TD.

54. The RSC determining apparatus according to claim 53, wherein the second indication information is used to indicate that the relay terminal is a layer-3 UE-to-network relay Layer-3 UE-to-Network Relay.

55. The RSC determining apparatus according to claim 50, wherein the first policy information comprises the ProSeP, and the ProSeP comprises at least one of the following:
a first mapping relationship;
a second mapping relationship;
a third mapping relationship;
a fourth mapping relationship;
a fifth mapping relationship;
a sixth mapping relationship; and
a seventh mapping relationship, wherein
the first mapping relationship is used to indicate a correspondence between a PDU session parameter and an RSC, the second mapping relationship is used to indicate a correspondence between connection capabilities information and the RSC, the third mapping relationship is used to indicate a correspondence between the connection capabilities information and the PDU session parameter, the fourth mapping relationship is used to indicate a correspondence between a TD component and the RSC, the fifth mapping relationship is used to indicate a correspondence between the TD component and the PDU session parameter, the sixth mapping relationship is used to indicate a correspondence between application information and the RSC, and the seventh mapping relationship is used to indicate a correspondence between the application information and the PDU session parameter.

56. The RSC determining apparatus according to any one of claims 50 to 55, wherein the URSP comprises the RSD and the TD, and the URSP satisfies any one of the following:
the TD comprises the RSC selection information, and the RSD does not comprise the RSC selection information; the TD does not comprise the RSC selection information, and the RSD comprises the RSC selection information;
the TD comprises the second indication information, and the RSD does not comprise the first indication information; and
the TD does not comprise the second indication information, and the RSD comprises the first indication information.

57. A terminal, comprising a processor and a memory, wherein the memory stores a program or instructions capable of being run on the processor, and the program or the instructions are executed by the processor to implement steps of the RSC determining method according to any one of claims 1 to 20.

58. A network side device, comprising a processor and a memory, wherein the memory stores a program or instructions capable of being run on the processor, and the program or the instructions are executed by the processor to implement steps of the RSC determining method according to any one of claims 21 to 28.

59. A readable storage medium, wherein the readable storage medium stores a program or instructions, and the program or the instructions are executed by a processor to implement steps of the RSC determining method according to any one of claims 1 to 20 or steps of the RSC configuration method according to any one of claims 21 to 28.

60. A chip, wherein the chip comprises a processor and a communication interface, the communication interface is coupled to the processor, and the processor is configured to run a program or instructions to implement steps of the RSC determining method according to any one of claims 1 to 20 or steps of the RSC determining method according to any one of claims 21 to 28.

61. A computer program/program product, wherein the computer program/program product is stored in a non-transient storage medium, and the program/program product is executed by at least one processor to implement steps of the RSC determining method according to any one of claims 1 to 20 or steps of the RSC determining method according to any one of claims 21 to 28.
